# EUROPEAN PATENT SPECIFICATION

(11) **EP 4 369 459 B1**
(45) Date of publication and mention of the grant of the patent: **08.10.2025**
(21) Application number: 23743465.9
(22) Date of filing: 18.01.2023
(51) Int. Cl.: H01M 10/0567, H01M 4/485, H01M 4/02, H01M 10/058, H01M 10/42, H01M 50/46, H01M 4/38, H01M 10/052, H01M 10/0525

(54) **NON-AQUEOUS ELECTROLYTE INCLUDING ADDITIVES FOR NON-AQUEOUS ELECTROLYTE, AND LITHIUM SECONDARY BATTERY INCLUDING THE SAME**
NICHT-WÄSSRIGER ELEKTROLYT MIT ADDITIVEN FÜR NICHT-WÄSSRIGEN ELEKTROLYT UND LITHIUM-SEKUNDÄRBATTERIE MIT DIESEM
ÉLECTROLYTE NON AQUEUX AVEC ADDITIFS, ET BATTERIE SECONDAIRE AU LITHIUM LE CONTENANT.

(30) Priority: 18.01.2022 KR 20220007153
(43) Date of publication of application: 15.05.2024
(73) Proprietor: LG Energy Solution, Ltd., Seoul 07335 (KR)
(72) Inventor: CHO, Yoon Gyo, Daejeon 34122 (KR); OH, Jeong Woo, Daejeon 34122 (KR); LEE, Chul Haeng, Daejeon 34122 (KR)
(74) Representative: Hoffmann Eitle
(86) International application number: PCT/KR2023/000885
(87) International publication number: WO 2023/140619

(56) References cited:
- CN-A- 108 365 265
- CN-A- 109 273 764
- JP-A- 2000 348 764
- JP-B2- 6 292 120
- US-A1- 2012 244 445
- US-A1- 2014 272 607

## Description

### TECHNICAL FIELD

### [Cross-reference to Related Applications]

This application claims the priority from Korean Patent Application No. 10-2022-0007153 filed on January 18, 2022.

### [Technical Field]

The present invention relates to a non-aqueous electrolyte including an additive for a non-aqueous electrolyte and a lithium secondary battery including the same.

### BACKGROUND ART

Recently, as the application field of lithium secondary batteries has rapidly expanded to power supply of electronic equipment such as electrical devices, electronic devices, communication devices, and computers, as well as power storage supply of large-area devices such as automobiles and power storage devices, demand for high-capacity, high-output and high-stability secondary batteries is increasing.

In particular, high capacity, high output, and long life characteristics are becoming important in lithium secondary batteries for automotive applications. In order to increase the capacity of the secondary battery, a positive electrode active material having a high energy density but low stability may be used, or the secondary battery may be driven at a high voltage.

However, in the case of driving a secondary battery under the above conditions, as charging and discharging proceeds, the film formed on the positive/negative electrode surface or the electrode surface structure deteriorates due to side reactions caused by the deterioration of the electrolyte, and transition metal ions from the positive electrode surface may be eluted. As described above, since the eluted transition metal ions are electro-deposited on the negative electrode and lower the passivation capability of the SEI, a problem of deterioration of the negative electrode occurs.

The deterioration of the secondary battery tends to be accelerated when the potential of the positive electrode increases or the battery is exposed to high temperatures.

In addition, when a lithium ion battery is used continuously for a long time or left at a high temperature,it is known that a so-called swelling phenomenon occurs in which gas is generated and the thickness of the battery is increased, and the amount of gas generated at this time depends on the state of the SEI.

Therefore, in order to solve this problem, research and development of a method for suppressing the elution of metal ions from the positive electrode and forming a stable SEI film on the negative electrode, thereby reducing the swelling of the secondary battery, and increasing the stability at high temperature are being tried.

### DISCLOSURE OF THE INVENTION

### TECHNICAL PROBLEM

As a result of various studies conducted to solve the above problem, the present invention intends to provide an additive for a non-aqueous electrolyte capable of inhibiting the degradation of the positive electrode, reducing the side reaction between the positive electrode and the electrolyte, and forming a stable SEI film on the negative electrode.

Further, in the present invention, it is an object of the present invention to provide a non-aqueous electrolyte having improved stability at a high temperature by including the additive for a non-aqueous electrolyte.

Further, in the present invention, it is an object of the present invention to provide a lithium secondary battery with improved overall performance by improving high-temperature cycle characteristics and high-temperature storage characteristics by including the non-aqueous electrolyte.

In order to achieve the above object, the present invention provides a non-aqueous electrolyte including an additive for a non-aqueous electrolyte represented by the following Chemical Formula 1:

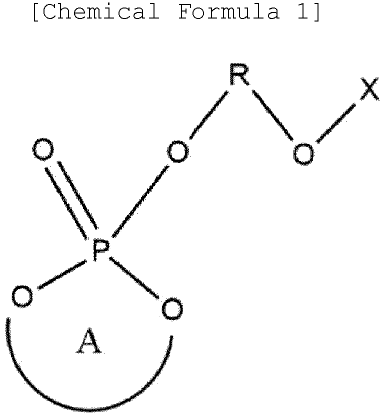

In Chemical Formula 1, A may be a cyclic phosphate group having 2 or 3 carbon atoms, R may be an alkylene group or alkenylene group having 1 to 5 carbon atoms, and X may be a perfluoroalkyl group having 1 to 5 carbon atoms.

According to another embodiment, the present invention provides a lithium secondary battery including the non-aqueous electrolyte.

### ADVANTAGEOUS EFFECTS

The compound represented by Chemical Formula 1, which is provided as an additive for a non-aqueous electrolyte of the present invention is a compound based on a cyclic phosphate structure, and when the negative electrode SEI layer is formed, a ring opening reaction proceeds, resulting in poly-phosphoesterification. Accordingly, it is possible to form a solid electrolyte interphase (SEI) film that is flexible and strong on the surface of the negative electrode. Therefore, it is possible to suppress deterioration of the passivation ability of the SEI at a high temperature, thereby preventing deterioration of the negative electrode.

In addition, in the compound represented by Chemical Formula 1 provided as an additive for a non-aqueous electrolyte of the present invention, since the perfluoroalkyl group is not directly substituted with the alkylene group connected to the oxygen of the phosphate group, but is substituted through oxygen, -CF₃ at the terminal is easily reduced to the form of LiF. Accordingly, a polymer-inorganic film rich in inorganic substances such as LiF can be formed, and deterioration due to an interfacial reaction is suppressed.

Therefore, when the non-aqueous electrolyte of the present invention including the compound of Chemical Formula 1 is used, since it is possible to form an electrode-electrolyte interface that is stable even at high temperatures and has low resistance, high-temperature cycle characteristics and high-temperature storage characteristics are improved, therefore a lithium secondary battery having an improved overall performance can be implemented.

### MODE FOR CARRYING OUT THE INVENTION

The terms or words used in the specification and claims should not be interpreted as being limited to conventional or dictionary meanings, and the terms or words should be interpreted as a meaning and a concept that are consistent with the technical concept of the present invention based on the principle that the inventor can appropriately define the concepts of terms in order to explain his/her own invention in the best way.

In this specification, the terms "includes," "comprises," or "has" and the like are intended to designate the presence of the features, numbers, steps, components, or combinations thereof that are implemented, and are not to be understood as precluding the possibility of the presence or addition of one or more other features or numbers, steps, components or combinations thereof.

In addition, in the description of "carbon number a to b" in the present specification, "a" and "b" mean the number of carbon atoms included in a specific functional group. That is, the functional group may include "a" to "b" carbon atoms. For example, "alkylene group having 1 to 5 carbon atoms" refers to an alkylene group containing 1 to 5 carbon atoms, i.e. -CH₂-, -CH₂CH₂-, - CH_{2C}H_{2C}H₂-, -CH_{2C}H (CH₃)-, -CH (CH₃)CH₂- and -CH (CH₃)CH₂CH₂-, etc.. In addition, in the present specification, the term "alkylene group" means a branched or unbranched divalent saturated hydrocarbon group.

Also, in the present specification, both the alkylene group and the alkenylene group may be substituted or unsubstituted. Unless otherwise defined, the term "substituted" means that at least one hydrogen bonded to carbon is substituted with an element other than hydrogen, for example, it means "substituted" with an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a heterocycloalkyl group having 3 to 12 carbon atoms, a heterocycloalkenyl group having 3 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, a haloaryl group having 6 to 20 carbon atom, etc.

Hereinafter, the present invention will be described in more detail.

### Non-aqueous Electrolyte

The non-aqueous electrolyte according to an embodiment of the present invention includes a compound represented by the following Chemical Formula 1 as an additive. The compound of Chemical Formula 1 below is a compound based on a cyclic phosphate structure, and when the negative electrode SEI layer is formed, a ring opening reaction proceeds, resulting in poly-phosphoesterification. Accordingly, it is possible to form a solid electrolyte interphase (SEI) film that is flexible and strong on the surface of the negative electrode.

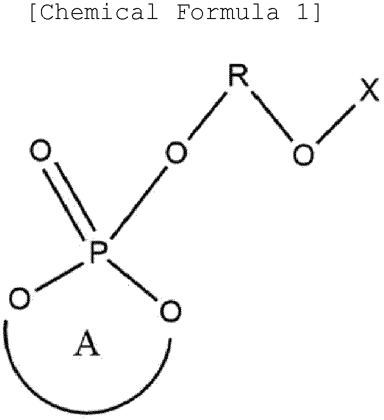

In Chemical Formula 1, A may be a cyclic phosphate group having 2 or 3 carbon atoms, R may be an alkylene group or alkenylene group having 1 to 5 carbon atoms, and X may be a perfluoroalkyl group having 1 to 5 carbon atoms.

In Chemical Formula 1, A may be a cyclic phosphate group having 2 or 3 carbon atoms, preferably a cyclic phosphate group having 2 carbon atoms. When A is a cyclic phosphate group having 2 carbon atoms, the ring strain is relatively high and the ring opening reaction occurs easily.

In Chemical Formula 1, R may be an alkylene group or alkenylene group having 1 to 5 carbon atoms, preferably an alkylene group having 1 to 5 carbon atoms, and most preferably an alkylene group having 1 to 3 carbon atoms.

In Chemical Formula 1, X may be a perfluoroalkyl group having 1 to 5 carbon atoms, preferably CF₃ or CF₂CF₃. Since the additive of Chemical Formula 1 contains a perfluoroalkyl group, an inorganic LiF material can be easily formed to form a stable polymer-inorganic-based SEI layer. Specifically, in the compound represented by Chemical Formula 1, since the perfluoroalkyl group is not directly substituted with the alkylene group connected to the oxygen of the phosphate group, but is substituted through oxygen, -CF₃ at the terminal is easily reduced to the form of LiF. Accordingly, a polymer-inorganic film rich in inorganic substances such as LiF can be formed, and deterioration due to an interfacial reaction is suppressed.

Specifically, the compound represented by Chemical Formula 1 of the present invention may be a compound represented by the following Chemical Formula 1-1.

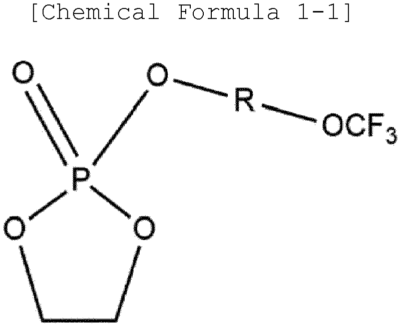

In Chemical Formula 1-1, R may be an alkylene group having 1 to 5 carbon atoms, and most preferably, an alkylene group having 1 to 3 carbon atoms.

Specifically, the compound represented by Chemical Formula 1 of the present invention may be any one of compounds represented by Chemical Formulas 2-1 to 2-4 below.

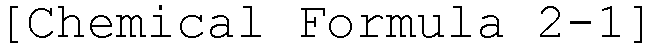

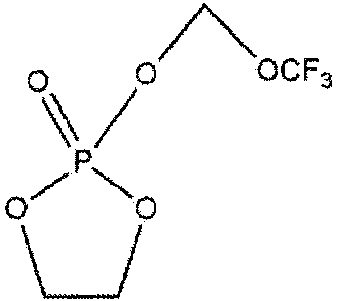

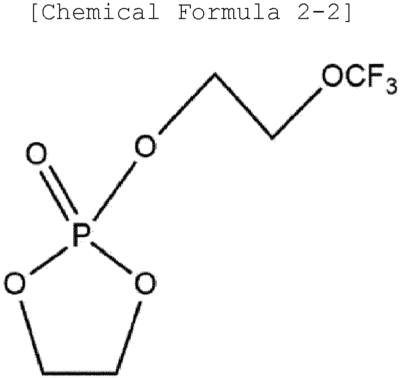

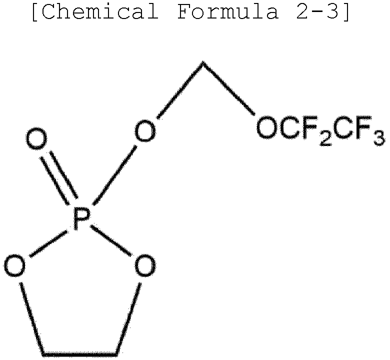

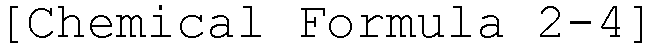

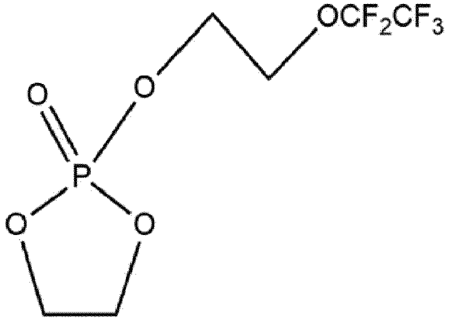

In the present invention, the additive for a non-aqueous electrolyte may be included in an amount 0.01 parts by weight to 5 parts by weight, preferably 0.1 parts by weight to 4 parts by weight, more preferably 0.8 parts by weight to 3.5 parts by weight, based on 100 parts by weight of the non-aqueous electrolyte. When the content of the compound represented by Chemical Formula 1 is less than 0.01 parts by weight, as the driving time increases, the effect of forming a positive/negative electrode film may be insignificant, and thus the effect of inhibiting transition metal elution may be lowered. In addition, when the content of the compound represented by Chemical Formula 1 exceeds 5 parts by weight, not only the viscosity of the electrolyte increases due to the excess additive, but also ionic conductivity decreases due to the increase in viscosity, which adversely affects the mobility of ions in the battery, and storage characteristics or lifespan characteristics may be lowered. In addition, due to the decomposition of excessive additives, battery resistance may increase, and side reactions and by-products may be caused.

The non-aqueous electrolyte according to the present invention may further include a lithium salt, an organic solvent and optionally other electrolyte additives.

The lithium salt is used as an electrolyte salt in a lithium secondary battery, and is used as a medium for transferring ions. Typically, lithium salts contain, for example, Li+ as cations and at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂) ₂N⁻, (CF₃SO₂) ₂N⁻, (FSO₂) ₂N⁻, BF₂C₂O₄⁻, BC₄O₈⁻, PF₄C₂O₄⁻, PF₂C₄O₈⁻, (CF₃) ₂PF₄⁻, (CF₃) ₃PF₃⁻, (CF₃) ₄PF₂⁻, (CF₃) ₅PF⁻, (CF₃) ₆P⁻, C₄F₉SO₃⁻, CF₃CF₂SO₃⁻, CF₃CF₂ (CF₃) ₂CO⁻, (CF₃SO₂)₂CH⁻, CF₃(CF₂)₇SO₃⁻ and SCN⁻ as anions.

Specifically, the lithium salt may include a single substance or a mixture of two or more selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂ (lithium bis(fluorosulfonyl)) imide; LiFSI), LiN(SO₂CF₃)₂ (lithium bis(perfluoroethanesulfonyl) imide; LiBETI) and LiN(SO₂CF₃)₂ (lithium bis (trifluoromethanesulfonyl) imide; LiTFSI). In addition to these, lithium salts commonly used in electrolytes of lithium secondary batteries may be used without limitation.

The lithium salt may be appropriately changed within the range that can be used in general, but in order to obtain an optimal effect of forming a film for preventing corrosion on the electrode surface, the lithium salt may be included at a concentration of 0.5 M to 5.0 M, preferably, 0.8 M to 2.5 M, more preferably 1.0 M to 2.0 M in the electrolyte. When the concentration of the lithium salt is less than 0.5 M, the lithium amount is insufficient and the capacity and cycle characteristics of the lithium secondary battery are inferior, and when the concentration exceeds 5.0 M, there may be a problem that as the viscosity of the non-aqueous electrolyte increases, the electrolyte impregnation ability decreases, ion conductivity decreases, and battery resistance increases.

The non-aqueous organic solvent may include at least one organic solvent selected from the group consisting of a cyclic carbonate-based organic solvent, a linear carbonate-based organic solvent, a linear ester-based organic solvent, and a cyclic ester-based organic solvent.

The additive according to the invention is particularly effective when a cyclic carbonate solvent is used. When a conventional electrolyte additive is used together with a cyclic carbonate solvent, it is difficult for the SEI film formed by decomposition of the cyclic carbonate solvent to be maintained as an SEI film due to the volume change of the negative electrode occurring during cycle progression. As a result, there was a problem in that the ionic conductivity of the electrolyte is lowered and cycle characteristics are deteriorated. However, when the polymer according to the present invention is used as an additive together with a cyclic carbonate solvent, a strong SEI film can be formed, thereby maintaining high cycle characteristics.

The cyclic carbonate-based organic solvent is a high-viscosity organic solvent that has a high dielectric constant and can dissociate lithium salts in the electrolyte well, and specific examples thereof may include at least one organic solvent selected from the group consisting of ethylene carbonate (EC), propylene carbonate (PC), fluoroethylene carbonate (FEC), 1,2-butylene carbonate, 2,3-butylene carbonate, 1,2-pentylene carbonate, 2,3-pentylene carbonate and vinylene carbonate, and among them, fluoroethylene carbonate may be included.

In addition, the linear carbonate-based organic solvent is an organic solvent having a low viscosity and a low dielectric constant, and representative examples thereof may include at least one organic solvent selected from the group consisting of dimethyl carbonate (DMC), diethyl carbonate (DEC), dipropyl carbonate, ethylmethyl carbonate (EMC), methylpropyl carbonate and ethylpropyl carbonate, and specifically, diethyl carbonate (DEC).

In addition, in order to prepare an electrolyte having high ionic conductivity, the organic solvent may include at least one carbonate-based organic solvent selected from the group consisting of a cyclic carbonate-based organic solvent and a linear carbonate-based organic solvent together with at least one ester-based organic solvent selected from the group consisting of a linear ester-based organic solvent and a cyclic ester-based organic solvent.

Specific examples of the linear ester-based organic solvents may include one or more organic solvents selected from the group consisting of methyl acetate, ethyl acetate, propyl acetate, methyl propionate, ethyl propionate, propyl propionate and butyl propionate.

In addition, the cyclic ester-based organic solvent may include one or more organic solvents selected from the group consisting of γ-butyrolactone, γ-valerolactone, γ-caprolactone, σ-valerolactone and ε-caprolactone.

Meanwhile, as the organic solvent, an organic solvent commonly used in the non-aqueous electrolyte may be added without limitation, as needed. For example, one or more organic solvents among an ether-based organic solvent, a glyme-based solvent, and a nitrile-based organic solvent may be further included.

Examples of the ether-based solvent may include any one or a mixture of two or more selected from the group consisting of dimethyl ether, diethyl ether, dipropyl ether, methyl ethyl ether, methylpropyl ether, ethylpropyl ether, 1,3-dioxolane (DOL) and 2,2-bis(trifluoromethyl) -1,3-dioxolane (TFDOL), but is not limited thereto.

The glyme-based solvent has a higher dielectric constant and lower surface tension than the linear carbonate-based organic solvent, is a solvent with less reactivity with metal, and may include at least one selected from the group consisting of dimethoxyethane (glyme, DME), diethoxyethane, digylme, triglyme, and tetraglyme (TEGDME), but is not limited thereto.

The nitrile-based solvent may be at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile,and 4-fluorophenylacetonitrile, but is not limited thereto.

In addition, the non-aqueous electrolyte of the present invention prevents negative electrode collapse due to decomposition of the non-aqueous electrolyte under a high-output environment, or if necessary, a known electrolyte additive may be further included in the non-aqueous electrolyte to further improve low-temperature high-rate discharge characteristics, high-temperature stability, overcharge prevention, and a battery expansion inhibition effect at high temperatures.

Representative examples of these other electrolyte additives may include at least one additive for forming an SEI layer selected from the group consisting of cyclic carbonate-based compounds, halogen-substituted carbonate-based compounds, sultone-based compounds, sulfate-based compounds, phosphate-based compounds, borate-based compounds, nitrile-based compounds, benzene-based compounds, amine-based compounds, silane-based compounds and lithium salt-based compounds.

The cyclic carbonate-based compound may include vinylene carbonate (VC) or vinylethylene carbonate.

The halogen-substituted carbonate-based compound may be fluoroethylene carbonate (FEC).

The sultone-based compound may include at least one compounds selected from the group consisting of 1,3-propane sultone (PS), 1,4-butane sultone, ethene sultone, 1,3-propene sultone (PRS), 1,4-butene sultone, and 1-methyl-1,3-propene sultone.

The sulfate-based compound may include ethylene sulfate (Esa), trimethylene sulfate (TMS), or methyl trimethylene sulfate (MTMS).

The phosphate-based compound may include one or more compounds selected from the group consisting of lithium difluoro (bisoxalato) phosphate, lithium difluoro phosphate, tetramethyl trimethyl silyl phosphate, trimethyl silyl phosphite, tris(2,2,2-trifluoroethyl) phosphate and tris(trifluoroethyl) phosphite.

The borate-based compound may include tetraphenylborate, lithium oxalyldifluoroborate (LiODFB), and lithium bisoxalatoborate (LiB(C₂O₄)₂, LiBOB).

The nitrile-based compound may include one or more compounds selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may include fluorobenzene, the amine-based compound may include triethanolamine or ethylenediamine, and the silane-based compound may include tetravinylsilane.

The lithium salt-based compound is a compound different from the lithium salt included in the non-aqueous electrolyte, and may include lithium difluorophosphate (LiDFP), LiPO₂F₂ or LiBF₄.

Among these other electrolyte additives, when a combination of vinylene carbonate (VC), 1,3-propane sultone (PS), ethylene sulfate (Esa), and lithium difluorophosphate (LiDFP) is further included, during the initial activation process of the secondary battery, a stronger SEI film can be formed on the surface of the negative electrode, gas generation that can be generated due to decomposition of the electrolyte at high temperature can be suppressed, and the high-temperature stability of a secondary battery can be improved.

Meanwhile, two or more of the other electrolyte additives may be mixed and used, and may be included in an amount of 0.01 to 20 wt%, specifically 0.01 to 10 wt%, preferably 0.05 to 5 wt% based on the total weight of the non-aqueous electrolyte. When the content of the other electrolyte additives is less than 0.01 wt%, the effect of improving the high-temperature storage characteristics and high-temperature lifespan characteristics of the battery is insignificant, and when the content of the other electrolyte additives exceeds 20 wt%, side reactions in the electrolyte during charging and discharging of the battery are likely to excessively occur. In particular, when the other electrolyte additives are added in excess, they may not be sufficiently decomposed at a high temperature, and thus may remain unreacted or precipitated in the electrolyte at room temperature. Accordingly, a side reaction in which the lifespan or resistance characteristic of the secondary battery is lowered may occur.

### Lithium Secondary Battery

The present invention also provides a lithium secondary battery including the non-aqueous electrolyte.

Specifically, the lithium secondary battery includes a positive electrode including a positive electrode active material, a negative electrode including a negative electrode active material, a separator interposed between the positive electrode and the negative electrode, and the aforementioned non-aqueous electrolyte.

In this case, the lithium secondary battery of the present invention may be manufactured according to a conventional method known in the art. For example, the lithium secondary battery of the present invention can be manufactured as follows:after a positive electrode, a negative electrode, and a separator between the positive and negative electrodes are sequentially stacked to form an electrode assembly, the electrode assembly is inserted into the battery case, and the non-aqueous electrolyte according to the present invention is injected.

### (1) Positive Electrode

The positive electrode may be manufactured by coating a positive electrode mixture slurry including a positive electrode active material, a binder, a conductive material, and a solvent on a positive electrode current collector.

The positive electrode current collector is not particularly limited as long as it has conductivity without causing a chemical change in the battery, and for example, stainless steel; aluminum; nickel; titanium; calcined carbon; or aluminum or stainless steel surface-treated with carbon, nickel, titanium, silver, etc. may be used.

The positive electrode active material is a compound capable of reversibly intercalating/deintercalating lithium, and specifically, may specifically include a lithium metal oxide including lithium and one or more metals such as cobalt, manganese, nickel, or aluminum. For example, as the lithium metal oxides, lithium-manganese-based oxides (for example, LiMnO₂, LiMn₂O₄, etc.), lithium-cobalt-based oxides (for example, LiCoO₂, etc.), lithium-nickel-based oxides (for example, LiNiO₂, etc.), lithium-nickel-manganese-based oxides (for example, LiNi_{1-y}Mn_{y}O₂ (where, 0<Y<1), LiMn_{2-z}Ni_{z}O₄ (where, 0<Z<2), etc.), lithium-nickel-cobalt-based oxides (for example, LiNi_{1-Y1}Co_{Y1}O₂ (where, 0<Y1<1) , etc.), lithium-manganese-cobalt-based oxides (for example, LiCo_{1-Y2}Mn_{Y2}O₂ (where, 0<Y2<1), LiMn_{2-z1}Co_{z1}O₄ (where, 0<Z1<2), etc.), lithium-nickel-manganese-cobalt-based oxides (for example, Li (NiₚCo_{q}Mnᵣ)O₂ (where, 0<p<1, 0<q<1, 0<r<1, p+q+r=1) or Li (Niₚ₁Co_{q1}Mnᵣ₁)O₄ (where, 0<p1<2, 0<q1<2, 0<r1<2, p1+q1+r1=2), etc.), or lithium-nickel-cobalt-transition metal (M) oxides (for example, Li(Niₚ₂Co_{q2}Mnᵣ₂Mₛ₂)O₂, where M is selected from the group consisting of Al, Fe, V, Cr, Ti, Ta, Mg and Mo, and p2, q2, r2 and s2 each are an atomic fraction of each independent element, 0<p2<1, 0<q2<1, 0<r2<1, 0<s2<1, p2+ q2+r2+s2=1), etc.) may be used, and any one or two or more of these compounds may be included.

Among them, in terms of enhancing the capacity characteristics and stability of the battery, the lithium metal oxide may be LiCoO₂, LiMnO₂, LiNiO₂, lithium nickel-manganese-cobalt oxides (for example, Li(Ni_{1/3}Mn_{1/3}Co_{1/3})O₂, Li(Ni_{0.6}Mn_{0.2}Co_{0.2})O₂, Li(Ni_{0.5}Mn_{0.3}CO_{0.2})O₂, Li(Ni_{0.7}Mn_{0.15}Co_{0.15})O₂ and Li(Ni_{0.8}Mn_{0.1}Co_{0.1})O₂, etc.), or lithium nickel cobalt aluminum oxides (for example, Li(Ni_{0.8}Co_{0.15}Al_{0.05})O₂, etc.), and taking into consideration the remarkable improvement effect by controlling the type and content ratio of the constituent elements forming the lithium composite metal oxide, the lithium composite metal oxide may be Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂ and Li(Ni_{0.8}Mn_{0.1}Co_{0.1})O₂, etc., and any one of these or a mixture of two or more may be used.

The positive electrode active material may be included in an amount of 80 wt% to 99 wt%, specifically, 90 wt% to 99 wt%, based on the total weight of solids in the positive electrode mixture slurry.

The binder is a component that assists in bonding the active material and the conductive material to the current collector.

Examples of such binders may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene (PE), polypropylene,ethylene-propylene-diene, sulfonated ethylene-propylene-diene, styrene-butadiene rubber, fluororubber, or various copolymers thereof.

Typically, the binder may be included in an amount of 1 to 20 wt%, preferably 1 to 15 wt%, more preferably 1 to 10 wt% based on the total weight of solids in the positive electrode mixture slurry.

The conductive material is a component for further improving the conductivity of the positive electrode active material.

The conductive material is a component for further improving the conductivity of the negative electrode active material, and may be added in an amount of 1 wt% to 20 wt% based on the total weight of solids in the negative electrode slurry. The conductive material is not particularly limited as long as it has conductivity without causing a chemical change in the battery, and for example, may include carbon powder such as carbon black, acetylene black, Ketjen black, channel black, furnace black, lamp black or thermal black; graphite powder such as natural graphite, artificial graphite;conductive fibers such as carbon fibers, carbon nanotubes, or metal fibers; conductive powders such as carbon fluoride powder, aluminum powder, or nickel powder; conductive whiskers such as zinc oxide or potassium titanate; conductive metal oxides such as titanium oxide; or conductive materials such as a polyphenylene derivative.

Typically, the conductive material may be included in an amount of 1 to 20 wt%, preferably 1 to 15 wt%, more preferably 1 to 10 wt% based on the total weight of solids in the positive electrode mixture slurry.

The solvent may include an organic solvent such as NMP (N-methyl-2-pyrrolidone), and may be used in an amount to achieve a desirable viscosity when the positive electrode active material and, optionally, a binder and a conductive material are included. For example, it may be included so that the concentration of the solids including the positive electrode active material, and optionally the binder and the conductive material is 50 to 95 wt%, preferably 70 to 95 wt%, more preferably 70 to 90 wt%.

### (2) Negative Electrode

The negative electrode is, for example, manufactured by coating a negative electrode mixture slurry containing a negative electrode active material, a binder, a conductive material and a solvent on the negative electrode current collector, or a graphite electrode made of carbon (C) or metal itself may be used as the negative electrode.

For example, when the negative electrode is manufactured by coating the negative electrode mixture slurry on the negative electrode current collector, the negative electrode current collector generally has a thickness of 3 to 500 µm. The negative electrode current collector is not particularly limited as long as it has conductivity without causing a chemical change in the battery, and for example, copper; stainless steel; aluminum; nickel; titanium; calcined carbon; or copper or stainless steel surface-treated with carbon, nickel, titanium, silver, etc.; or an aluminum-cadmium alloy may be used. In addition, like the positive electrode current collector, fine irregularities may be formed on a surface of the negative electrode current collector to strengthen the adhesion with the negative electrode active material, and the negative electrode current collector may take various forms such as films, sheets, foils, nets, porous materials, foam, non-woven materials, etc.

In addition, the negative electrode active material may include at least one selected from the group consisting of lithium metal, a carbon material capable of reversibly intercalating/deintercalating lithium ions; metals or alloys of these metals and lithium; metal composite oxides; materials capable of doping and dedoping lithium; and transition metal oxides.

As a carbon material capable of reversibly intercalating/deintercalating lithium ions, any carbon-based negative active material generally used in lithium ion secondary batteries may be used without particular limitation, and a representative example thereof is crystalline carbon, amorphous carbon or a combination thereof. Examples of the crystalline carbon include graphite such as amorphous, plate-like, flake, spherical or fibrous natural graphite or artificial graphite, and examples of the amorphous carbon include soft carbon (soft carbon: low-temperature calcined carbon), hard carbon, mesophase pitch carbide, calcined coke, etc.

Examples of the above metals or alloys of these metals with lithium include metals selected from the group consisting of Cu, Ni, Na, K, Rb, Cs, Fr, Be, Mg, Ca, Sr, Si, Sb, Pb, In, Zn, Ba, Ra, Ge, Al, and Sn or an alloy of these metals and lithium.

Examples of the metal composite oxide include one or more selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃(0≤x≤1), LiₓWO₂(0≤x≤1) and SnₓMe₁₋ₓMe'_{y}O_{z} (Me: Mn, Fe, Pb, Ge; Me': Al, B, P, Si, elements of groups 1, 2 and 3 of the periodic table, halogens; 0<x≤1; 1≤y≤3;1≤z≤8).

Examples of the material capable of doping and dedoping lithium include Si, SiOx (0<x≤2), an Si-Y alloy (wherein Y is an element selected from the group consisting of alkali metals, alkaline earth metals, group 13 elements, group 14 elements, transition metals, rare earth elements and combinations thereof, but is not Si), Sn, SnO2, Sn-Y (wherein Y is an element selected from the group consisting of alkali metals, alkaline earth metals, group 13 elements, group 14 elements, transition metals, rare earth elements, and combinations thereof and is not Sn), and one or more of these and SiO₂ may be mixed and used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and combinations thereof.

Examples of the transition metal oxide can include a lithium-containing titanium composite oxide (LTO), vanadium oxide, lithium vanadium oxide, etc.

The additive according to the present invention is particularly effective when Si or SiOₓ (0<x≤2) is used as a negative electrode active material. Specifically, in the case of using a Si-based negative electrode active material, when a strong SEI layer is not formed on the surface of the negative electrode during initial activation, deterioration of lifespan characteristics is promoted due to extreme volume expansion-contraction during cycle progression. However, since the additive according to the invention can form a resilient yet robust SEI layer, the lifespan characteristics and storage characteristics of the secondary battery using the Si-based negative electrode active material can be excellent.

The negative electrode active material may be included in an amount of 50 to 99% by weight, preferably 60 to 99% by weight, and more preferably 70 to 98% by weight based on the total weight of solids in the negative electrode mixture slurry.

The binder is a component that assists in bonding between the conductive material, the active material, and the current collector. Examples of such binders may include polyvinylidene fluoride(PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene, sulfonated ethylene-propylene-diene, styrene-butadiene rubber, fluororubber, or various copolymers thereof.

Typically, the binder may be included in an amount of 1 to 20 wt%, preferably 1 to 15 wt%, more preferably 1 to 10 wt% based on the total weight of solids in the negative electrode mixture slurry.

The conductive material is a component for further improving the conductivity of the negative electrode active material, and may be added in an amount of 1 wt% to 20 wt% based on the total weight of solids in the negative electrode slurry. The conductive material is not particularly limited as long as it has conductivity without causing a chemical change in the battery, and for example, may include carbon powder such as carbon black, acetylene black, Ketjen black, channel black, furnace black, lamp black or thermal black; graphite powder, such as natural graphite, artificial graphite; conductive fibers such as carbon nanotubes, carbon fibers or metal fibers; conductive powders such as carbon fluoride powder, aluminum powder, or nickel powder; conductive whiskers such as zinc oxide or potassium titanate; conductive metal oxides such as titanium oxide; or conductive materials such as a polyphenylene derivative.

The conductive material may be included in an amount of 1 to 20 wt%, preferably 1 to 15 wt%, more preferably 1 to 10 wt% based on the total weight of solids in the negative electrode mixture slurry.

The solvent may include water or an organic solvent such as NMP (N-methyl-2-pyrrolidone), and may be used in an amount to achieve a desirable viscosity when the negative active material and, optionally, a binder and a conductive material are included. For example, it may be included so that the concentration of the solids including the negative electrode active material, and optionally the binder and the conductive material is 50 wt% to 95 wt%, preferably 70 wt% to 90 wt%.

When a metal itself is used as the negative electrode, it may be manufactured by physically bonding, rolling, or depositing a metal on the metal thin film itself or the negative electrode current collector. As the deposition method, an electrical deposition method or a chemical vapor deposition method for metal may be used.

For example, the metal to be bonded/rolled/deposited on the metal thin film itself or the negative electrode current collector may include one type of metal or an alloy of two types of metals selected from lithium (Li), nickel (Ni), tin (Sn), copper (Cu), and indium (In).

### (3) Separator

In addition, as the separator, a conventional porous polymer film conventionally used as a separator, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer may be used alone or as a laminate thereof, ora conventional porous nonwoven fabric, for example, a nonwoven fabric made of high melting point of glass fiber, polyethylene terephthalate fiber, etc. may be used, but is not limited thereto. In addition, a coated separator including a ceramic component or a polymer material may be used to secure heat resistance or mechanical strength, and may optionally be used in a single-layer or multi-layer structure.

The external shape of the lithium secondary battery of the present invention is not particularly limited, but may be a cylindrical type using a can, a prismatic type, a pouch type, or a coin type.

Hereinafter, the present invention will be described in more detail through specific examples. However, the following examples are only examples to help the understanding of the present invention, and do not limit the scope of the present invention.

### Examples

### Example 1

### (Preparation of non-aqueous electrolyte)

A non-aqueous solvent was prepared by dissolving LiPF₆ in fluoroethylenecarbonate (FEC) and diethyl carbonate (DEC) in a volume ratio of 10:90 as an organic solvent to 1.5 M, and 0.1 g of the compound of Formula 2-1 was added to 99.9 g of the non-aqueous solvent to prepare a non-aqueous electrolyte.

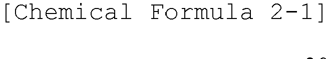

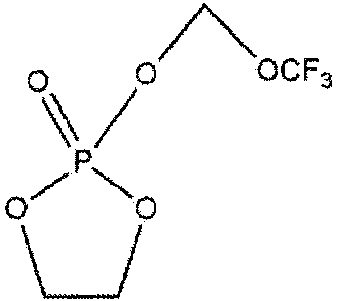

### (Manufacture of lithium secondary battery)

A positive electrode active material (LiNi_{0.85}Co_{0.05}Mn_{0.08}Al_{0.02}O₂), a conductive material (carbon nanotube), and a binder (polyvinylidene fluoride) were added to N-methyl-2-pyrrolidone (NMP) as a solvent in a weight ratio of 97.74:0.7:1.56 to prepare a positive electrode slurry (solids: 75.5 wt%). The positive electrode slurry was applied on one surface of a positive electrode current collector (Al thin film) having a thickness of 15 µm, and dried and roll pressed to manufacture a positive electrode.

A negative electrode active material (silicon; Si), a conductive material (carbon black), and a binder (styrene-butadiene rubber (SBR)-carboxymethyl cellulose (CMC)) were added to N-methyl-2-pyrrolidone (NMP) as a solvent to prepare a negative electrode slurry (solids: 26 wt%). The negative electrode slurry was applied on a negative electrode current collector (Cu thin film) having a thickness of 15 µm, dried and rolled to manufacture a negative electrode.

A polyolefin-based porous separator coated with inorganic particles Al₂O₃ was interposed between the manufactured positive electrode and the negative electrode in a dry room, and then the prepared non-aqueous electrolyte was injected to manufacture a secondary battery.

### Example 2

A secondary battery was manufactured in the same manner as in Example 1, except that 0.3 g of the compound of Formula 2-1 was added to 99.7 g of the non-aqueous solvent prepared in Example 1 to prepare a non-aqueous electrolyte.

### Example 3

A secondary battery was manufactured in the same manner as in Example 1, except that 0.5 g of the compound of Formula 2-1 was added to 99.5 g of the non-aqueous solvent prepared in Example 1 to prepare a non-aqueous electrolyte.

### Example 4

A secondary battery was manufactured in the same manner as in Example 1, except that 1.0 g of the compound of Formula 2-1 was added to 99.0 g of the non-aqueous solvent prepared in Example 1 to prepare a non-aqueous electrolyte.

### Example 5

A secondary battery was manufactured in the same manner as in Example 1, except that 3.0 g of the compound of Formula 2-1 was added to 97.0 g of the non-aqueous solvent prepared in Example 1 to prepare a non-aqueous electrolyte.

### Comparative Example 1

A secondary battery was manufactured in the same manner as in Example 1, except that a non-aqueous electrolyte was prepared using 100 g of the non-aqueous solvent prepared in Example 1.

### Comparative Example 2

A secondary battery was manufactured in the same manner as in Example 1, except that 0.1 g of the compound of the following Chemical Formula A was added to 99.9 g of the non-aqueous solvent prepared in Example 1 to prepare a non-aqueous electrolyte.

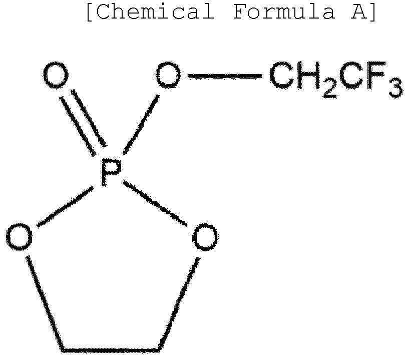

### Experimental Example 1 - Evaluation of high-temperature cycle characteristics

For each of the secondary batteries manufactured in Examples 1 to 5 and Comparative Examples 1 and 2, cycle characteristics were evaluated.

Specifically, each of the batteries manufactured in Examples 1 to 5 and Comparative Examples 1 and 2 was charged to 4.2V at 45°C at 1C constant current, and discharged to 3.11V at 0.5C constant current as 1 cycle, and after 600 cycles of charging and discharging, the capacity retention rate compared to the initial capacity after 1 cycle was measured. The results are shown in Table 1 below.

**[Table 1]**

| | Capacity retention rate (%) |
|---|---|
| Example 1 | 80.0 |
| Example 2 | 81.1 |
| Example 3 | 81.5 |
| Example 4 | 82.7 |
| Example 5 | 88.6 |
| Comparative Example 1 | 78.4 |
| Comparative Example 2 | 79.5 |

As shown in Table 1, Examples 1 to 5 in which the additive for a non-aqueous electrolyte of the present invention was used had a higher capacity retention rate and superior lifespan characteristics compared to Comparative Examples 1 and 2 in which the additive was not used. In particular, in the case of compound A used in the secondary battery of Comparative Example 2, CF₃ at the terminal is directly connected to an alkylene group, and thus it is different from the additive of the present invention in which CF₃ at the terminal is connected to an alkylene group via oxygen. -CF₃ is a strong electron withdrawing group (EWG), and when it is directly linked to an alkylene group, it is thought that it is difficult to reduce to the LiF form. Meanwhile, when the terminal is present in the form of -OCF₃ as in the additive of the present invention, it is considered that as a weak EWG is obtained, the LiF formation reaction is easy, and it is easy for the polymer-inorganic composite film to be formed on the negative electrode, and thus the capacity retention rate at high temperature is excellent.

### Experimental Example 2 - Evaluation of high temperature storage characteristics

For each of the secondary batteries manufactured in Examples 1 to 5 and Comparative Examples 1 and 2, high temperature storage characteristics were evaluated.

Specifically, the secondary batteries of Examples 1 to 5 and Comparative Examples 1 and 2 were fully charged to 4.2V, respectively, and then stored at 60 °C for 6 weeks.

Before storage, the capacity of the fully charged secondary battery was measured and set as the initial capacity of the secondary battery.

After 6 weeks, the capacity of the stored secondary battery was measured to calculate the capacity decrease during the storage period of 6 weeks. The capacity retention rate was derived after 6 weeks by calculating the percentage ratio of the reduced capacity to the initial capacity of the secondary battery. The results are shown in Table 2 below.

**[Table 2]**

| | Capacity retention rate (%) |
|---|---|
| Example 1 | 91.9 |
| Example 2 | 92.1 |
| Example 3 | 92.3 |
| Example 4 | 93.7 |
| Example 5 | 97.2 |
| Comparative Example 1 | 87.9 |
| Comparative Example 2 | 90.7 |

As shown in Table 2, it was confirmed that the secondary batteries of Examples 1 to 5 had a higher capacity retention rate after 6 weeks than the secondary batteries of Comparative Examples 1 and 2, and thus had stable performance at high temperature. In particular, in the case of compound A used in the secondary battery of Comparative Example 2, CF₃ at the terminal is directly connected to an alkylene group, and thus it is different from the additive of the present invention in which CF₃ at the terminal is connected to an alkylene group via oxygen. -CF₃ is a strong electron withdrawing group (EWG), and when it is directly linked to an alkylene group, it is thought that it is difficult to reduce to the LiF form. Meanwhile, when the terminal is present in the form of -OCF₃ as in the additive of the present invention, it is considered that as a weak EWG is obtained, the LiF formation reaction is easy, and it is easy for the polymer-inorganic composite film to be formed on the negative electrode, and thus the capacity retention rate during long-term storage at high temperature is excellent.

## Claims

1. A non-aqueous electrolyte including an additive for a non-aqueous electrolyte represented by the following Chemical Formula 1: 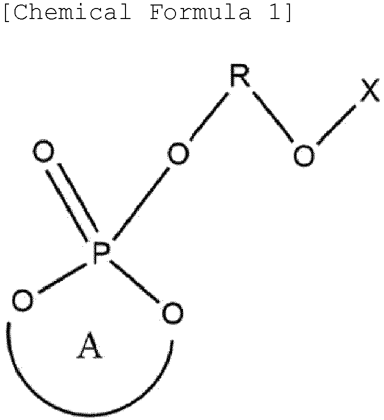
wherein, A is a cyclic phosphate group having 2 or 3 carbon atoms,
R is an alkylene group or alkenylene group having 1 to 5 carbon atoms, and
X is a perfluoroalkyl group having 1 to 5 carbon atoms.

2. The non-aqueous electrolyte of claim 1, wherein R is an alkylene group having 1 to 3 carbon atoms.

3. The non-aqueous electrolyte of claim 1, wherein X is CF₃ or CF₂CF₃.

4. The non-aqueous electrolyte of claim 1, wherein the additive represented by Chemical Formula 1 is a compound represented by Chemical Formula 1-1: 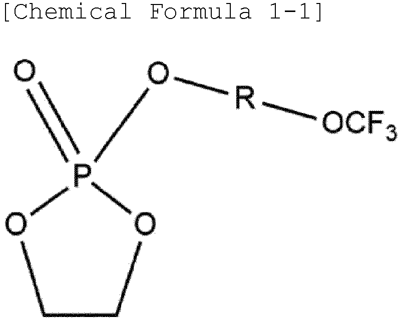 In Chemical Formula 1-1, R is an alkylene group having 1 to 5 carbon atoms.

5. The non-aqueous electrolyte of claim 1, wherein the additive represented by Chemical Formula 1 is any one of compounds represented by Chemical Formulas 2-1 to 2-4:

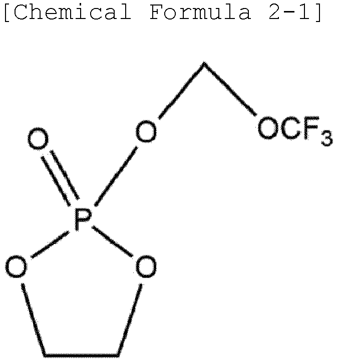

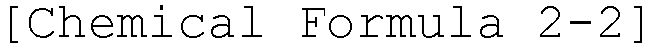

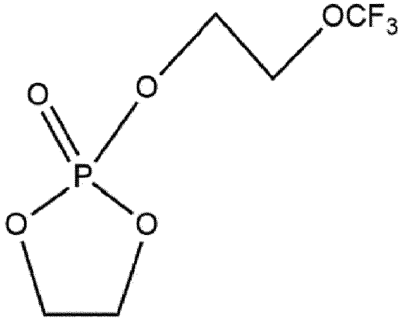

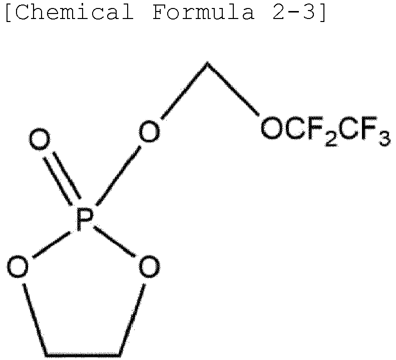

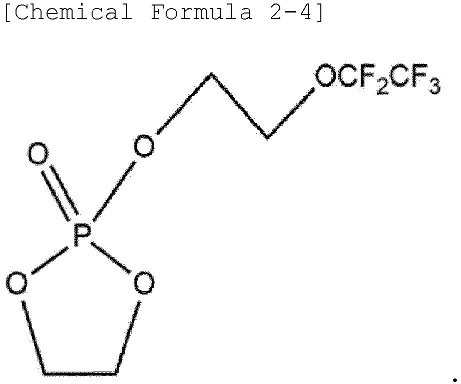

6. The non-aqueous electrolyte of claim 1, wherein the additive for a non-aqueous electrolyte is included in an amount of 0.01 to 5 parts by weight based on 100 parts by weight of the non-aqueous electrolyte.

7. The non-aqueous electrolyte of claim 1, further including a lithium salt and an organic solvent.

8. The non-aqueous electrolyte of claim 7, wherein the lithium salt is one or more from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂, LiN(SO₂CF₂CF₃)₂ and LiN(SO₂CF₃)₂.

9. The non-aqueous electrolyte of claim 7, wherein the lithium salt is included at a concentration of 0.5 M to 5 M.

10. The non-aqueous electrolyte of claim 7, wherein the organic solvent includes at least one organic solvent selected from the group consisting of a cyclic carbonate-based organic solvent, a linear carbonate-based organic solvent, a linear ester-based organic solvent, and a cyclic ester-based organic solvent.

11. The non-aqueous electrolyte of claim 10, wherein the organic solvent includes a cyclic carbonate-based organic solvent.

12. A lithium secondary battery including a positive electrode; a negative electrode; a separator interposed between the positive electrode and the negative electrode; and the non-aqueous electrolyte of claim 1.

13. The lithium secondary battery of claim 12, wherein the negative electrode includes SiOₓ (0≤x≤2) as a negative electrode active material.

14. The lithium secondary battery of claim 12, wherein the additive is any one of compounds represented by Chemical Formulas 2-1 to 2-4:

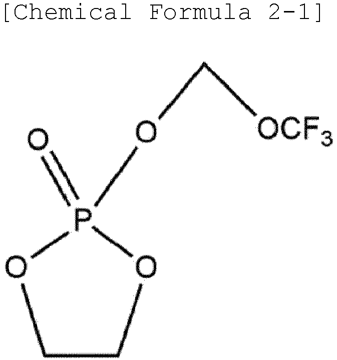

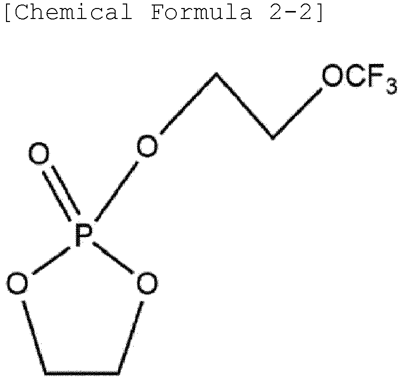

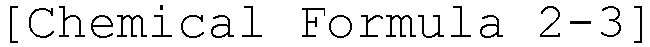

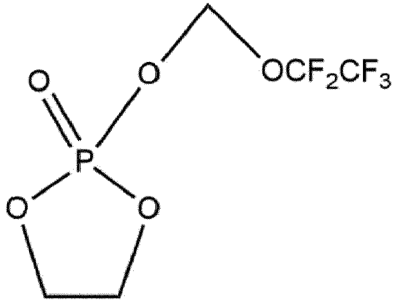

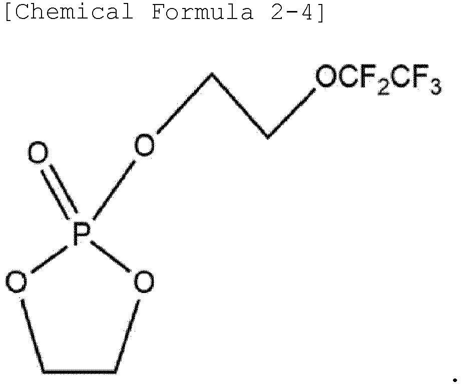

## Patentansprüche

1. Nicht-wässriger Elektrolyt einschließlich eines Additives für einen nicht-wässrigen Elektrolyt, der durch die folgende chemische Formel 1 dargestellt wird: 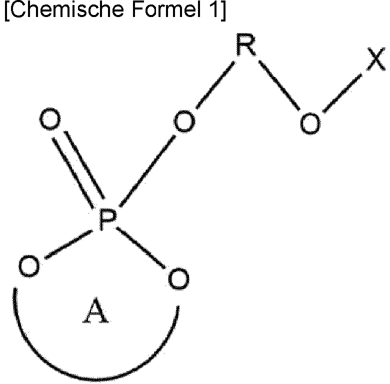
wobei A eine cyclische Phosphatgruppe mit 2 oder 3 Kohlenstoffatomen ist,
R eine Alkylengruppe oder Alkenylengruppe mit 1 bis 5 Kohlenstoffatomen ist, und
X eine Perfluoralkylgruppe mit 1 bis 5 Kohlenstoffatomen ist.

2. Nicht-wässriger Elektrolyt nach Anspruch 1, wobei R eine Alkylengruppe mit 1 bis 3 Kohlenstoffatomen ist.

3. Nicht-wässriger Elektrolyt nach Anspruch 1, wobei X CF₃ oder CF₂CF₃ist.

4. Nicht-wässriger Elektrolyt nach Anspruch 1, wobei das durch die chemische Formel 1 dargestellte Additiv eine durch die chemische Formel 1-1 dargestellte Verbindung ist: 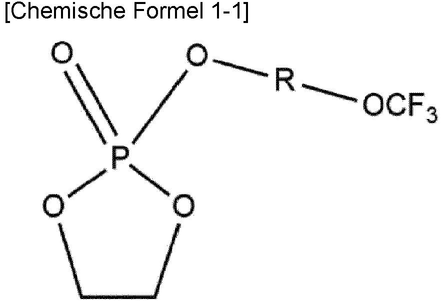 In der chemischen Formel 1-1 ist R eine Alkylengruppe mit 1 bis 5 Kohlenstoffatomen.

5. Nicht-wässriger Elektrolyt nach Anspruch 1, wobei das durch die chemische Formel 1 dargestellte Additiv eine der durch die chemischen Formeln 2-1 bis 2-4 dargestellten Verbindungen ist:

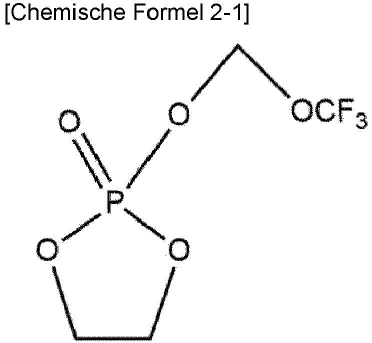

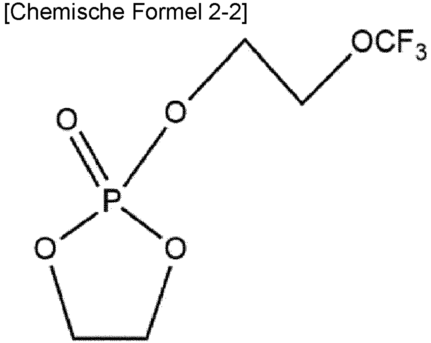

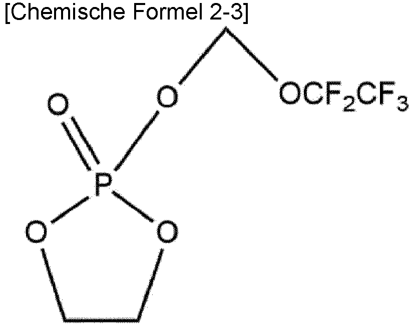

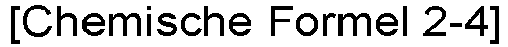

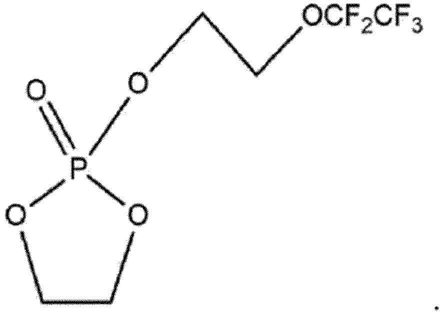

6. Nicht-wässriger Elektrolyt nach Anspruch 1, wobei das Additiv für einen nicht-wässrigen Elektrolyten in einer Menge von 0,01 bis 5 Gewichtsteilen, basierend auf 100 Gewichtsteilen des nicht-wässrigen Elektrolyten, eingeschlossen ist.

7. Nicht-wässriger Elektrolyt nach Anspruch 1, weiter einschließlich eines Lithiumsalzes und eines organischen Lösungsmittels.

8. Nicht-wässriger Elektrolyt nach Anspruch 7, wobei das Lithiumsalz eines oder mehrere aus der Gruppe bestehend aus LiCl, LiBr, Lil, LiBF₄, LiClO₄,LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂, LiN (SO₂CF₂CF₃)₂ und LiN(SO₂CF₃)₂ist.

9. Nicht-wässriger Elektrolyt nach Anspruch 7, wobei das Lithium Salz in einer Konzentration von 0,5 M bis 5 M eingeschlossen ist.

10. Nicht-wässriger Elektrolyt nach Anspruch 7, wobei das organische Lösungsmittel mindestens ein organisches Lösungsmittel einschließt, das aus der Gruppe ausgewählt ist, die aus einem organischen Lösungsmittel auf Basis eines cyclischen Carbonats, einem organischen Lösungsmittel auf Basis eines linearen Carbonats, einem organischen Lösungsmittel auf Basis eines linearen Esters und einem organischen Lösungsmittel auf Basis eines cyclischen Esters besteht.

11. Nicht-wässriger Elektrolyt nach Anspruch 10, wobei das organische Lösungsmittel ein organisches Lösungsmittel auf Basis eines cyclischen Carbonats einschließt.

12. Lithium-Sekundärbatterie, die eine positive Elektrode; eine negative Elektrode; einen zwischen der positiven Elektrode und der negativen Elektrode angeordneten Separator und den nicht-wässrigen Elektrolyten nach Anspruch 1 einschließt.

13. Lithium-Sekundärbatterienach Anspruch 12, wobei die negative Elektrode SiOₓ (0 ≤ x ≤ 2) als ein Negativelektrodenaktivmaterial einschließt.

14. Lithium-Sekundärbatterie nach Anspruch 12, wobei das Additiv eine der Verbindungen ist, die durch die chemischen Formeln 2-1 bis 2-4 dargestellt sind:

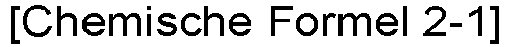

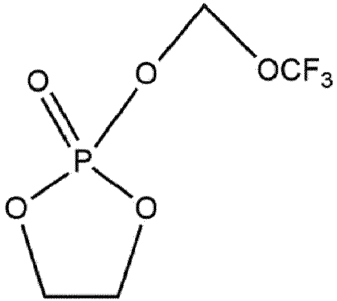

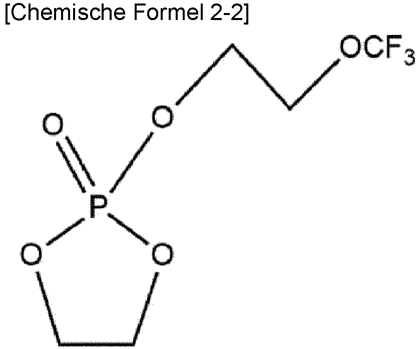

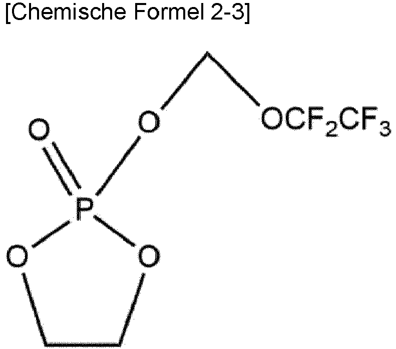

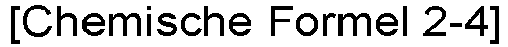

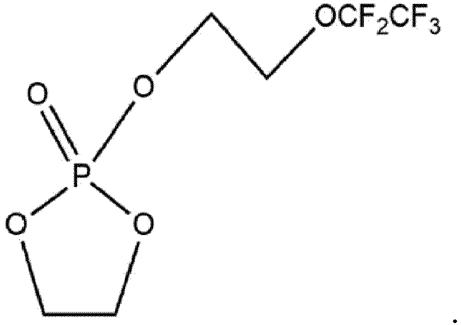

## Revendications

1. Électrolyte non aqueux incluant un additif pour un électrolyte non aqueux représenté par la formule chimique 1 suivante : 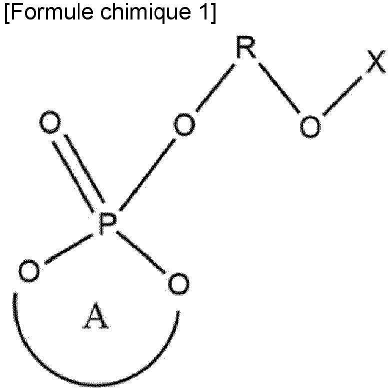
dans lequel A est un groupe phosphate cyclique présentant 2 ou 3 atomes de carbone,
R est un groupe alkylène ou un groupe alcénylène présentant 1 à 5 atomes de carbone, et
X est un groupe perfluoroalkyle présentant 1 à 5 atomes de carbone.

2. Électrolyte non aqueux selon la revendication 1, dans lequel R est un groupe alkylène présentant 1 à 3 atomes de carbone.

3. Électrolyte non aqueux selon la revendication 1, dans lequel X est CF₃ ou CF₂CF₃.

4. Électrolyte non aqueux selon la revendication 1, dans lequel l'additif représenté par la formule chimique 1 est un composé représenté par la formule chimique 1-1 : 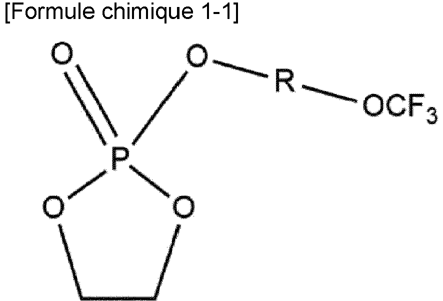 Dans la Formule chimique 1-1, R est un groupe alkylène présentant 1 à 5 atomes de carbone.

5. Électrolyte non aqueux selon la revendication 1, dans lequel l'additif représenté par la formule chimique 1 est un quelconque des composés représentés par les formules chimiques 2-1 à 2-4 :

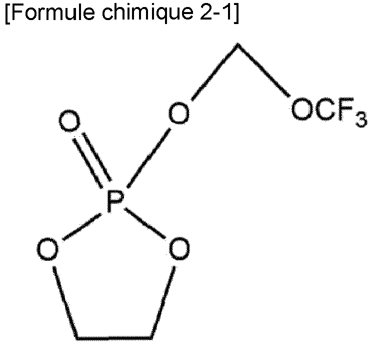

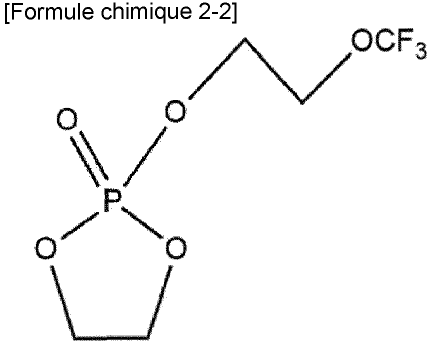

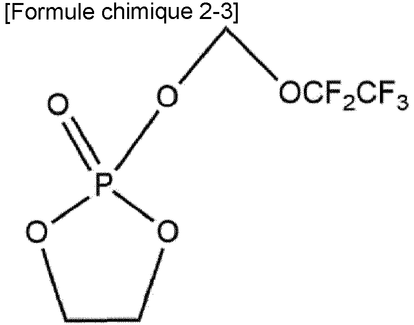

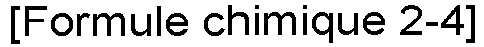

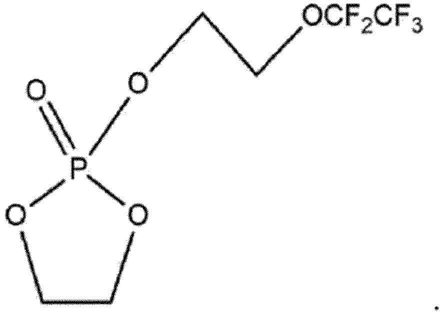

6. Électrolyte non aqueux selon la revendication 1, dans lequel l'additif pour un électrolyte non aqueux est inclus dans une quantité de 0,01 à 5 parties en poids sur la base de 100 parties en poids de l'électrolyte non aqueux.

7. Électrolyte non aqueux selon la revendication 1, incluant en outre un sel de lithium et un solvant organique.

8. Électrolyte non aqueux selon la revendication 7, dans lequel le sel de lithium est un ou plusieurs éléments dans le groupe constitué de LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂, LiN (SO₂CF₂CF₃)₂ et LiN(SO₂CF₃)₂.

9. Électrolyte non aqueux selon la revendication 7, dans lequel le sel de lithium est inclus à une concentration de 0,5 M à 5 M.

10. Électrolyte non aqueux selon la revendication 7, dans lequel le solvant organique inclut au moins un solvant organique choisi dans le groupe constitué d'un solvant organique à base de carbonate cyclique, un solvant organique à base de carbonate linéaire, un solvant organique à base d'ester linéaire et un solvant organique à base d'ester cyclique.

11. Électrolyte non aqueux selon la revendication 10, dans lequel le solvant organique inclut un solvant organique à base de carbonate cyclique.

12. Batterie secondaire au lithium incluant une électrode positive; une électrode négative ; un séparateur interposé entre l'électrode positive et l'électrode négative ; et l'électrolyte non aqueux de la revendication 1.

13. Batterie secondaire au lithium selon la revendication 12, dans lequel l'électrode négative inclut SiOₓ (0≤x≤2) en tant que matériau actif d'électrode négative.

14. Batterie secondaire au lithium selon la revendication 12, dans lequel l'additif est un quelconque des composés représentés par les formules chimiques 2-1 à 2-4 :
